# EUROPÄISCHE PATENTSCHRIFT

(11) **EP 0 913 370 B1**
(45) Veröffentlichungstag und Bekanntmachung des Hinweises auf die Patenterteilung: **21.05.2003**
(21) Anmeldenummer: 98119029.1
(22) Anmeldetag: 08.10.1998
(51) Int. Cl.: C04B 24/42

(54) **Verfahren zur Herstellung von in der Masse hydrophobiertem Beton**
Process for the production of a concrete hydrophobised in bulk
Procédé de production d'un béton rendu hydrophobe en vrac

(30) Priorität: 30.10.1997 DE 19747794
(43) Veröffentlichungstag der Anmeldung: 06.05.1999
(73) Patentinhaber: Degussa AG, 40474 Düsseldorf (DE)
(72) Erfinder: Göbel, Thomas, Dr., 63457 Hanau (DE); Lortz, Wolfgang, Dr., 63607 Wächtersbach (DE); Störger, Reiner, 63500 Seligenstadt (DE); Wittmann, Folker, Prof., 8103 Unterengstringen (CH); Gerdes, Andreas, 8046 Zürich (CH)

(56) Entgegenhaltungen:
- EP-A- 0 234 024
- EP-A- 0 538 555
- EP-A- 0 616 989
- EP-A- 0 796 826
- WO-A-81/01703
- GB-A- 1 592 569

## Beschreibung

Die Erfindung betrifft ein Verfahren zur Herstellung eines zumindest weitgehend homogen hydrophobiertem Beton (Fachbegriff: Massenhydrophobierung) durch das Einmischen von Organosilicumverbindungen enthaltenden wäßrigen Emulsionen in noch nicht ausgehärtete Betonmischungen.
Aus dem Stand der Technik sind Imprägnierverfahren bekannt, bei denen man derartige Emulsionen auf Betonteile aufstreicht und diese somit an der Oberfläche hydrophobiert (EP-B-0538 555, EP-B-0340816, EP-A-0234024).
Auch wenn auf diesem Wege schon gute Ergebnisse z. B. im Hinblick auf die Eindringtiefe von Feuchtigkeit erzielt werden, ist das Verfahren mit Problemen verbunden. Diese bestehen einmal darin, daß der Anwender die Emulsionen sorgfälzig und lückenlos auf der Betonoberfläche aufzutragen hat.
Fehlstellen im Beton sind jedoch von außen nicht zu erkennen.Sie stellen aber mögliche Durchbruchstellen für Schadflüssigkeiten dar, so daß der Schutz der Oberfläche nicht mehr garantiert ist.

Zusätzlich trägt die Alterung der Betonoberfläche durch chemische, thermische und auch mechanische Einflüsse zur Schwächung der hydrophoben Schutzschicht bei.
Das bedeutet, daß sie in regelmäßigen Abständen erneuert werden muß. Diese Erneuerung setzt jedoch voraus, daß die zu behandelnde Oberfläche zuvor aufwendig z. B. mit einem Höchstdruckwasserstrahl gereinigt wird.

Aufgabe der Erfindung ist es daher, ein Verfahren bereitzustellen, mit dessen Hilfe Werkteile aus Beton bzw. Bauten aus Beton wirksam gegen Korrosion geschützt werden können, ohne durch aufwendige, wiederholt durchzuführende Maßnahmen diesen Schutz sichern zu müssen.

In diesem Zusammenhang ist auch zu berücksichtigen, daß durch das Zumischen von diesen Schutz bewirkenden chemischen Verbindungen die Verarbeitbarkeit von Betonmischungen, z. B. im Hinblick auf die Viskosität nicht erschwert und in Hinsicht auf die die Festigkeit beeinflussenden Eigenschaften wie z. B. die Porosität diese Parameter nicht verschlechtert werden.

Gegenstand der Erfindung ist ein Verfahren zur Herstellung von in der Masse hydrophobiertem Beton, das dadurch gekennzeichnet ist, daß man einer wasserhaltigen Mischung aus an sich bekannten anorganischen und gegebenenfalls in geringem Umfang organischen Bestandteilen während der Herstellung oder gegebenenfalls im Anschluß daran eine wäßrige hydrolysierbare Organosiliciumverbindungen enthaltende Emulsion zusetzt und die Mischung anschließend zum Beton aushärten läßt.
Emulsionen dieses Typs sind an sich bekannt, werden aber nach dem Stand der Technik nur zur Hydrophobierung von Oberflächen eingesetzt.
Wässrige Emulsionen, die sich für die erfindungsgemäße Verwendung eignen, finden sich z. B. in der Beschreibung der EP-A 0234 024, EP-B 0340 816 oder der EP-A- 0616 989. Die in diesen Patentanmeldungen offenbarten wässrigen Emulsionen sind auch Bestandteil dieser Erfindung.Diese enthalten bevorzugt hydrolysierbare Alkylalkoxysilane der allgemeinen Formel (I) in einer Menge von 1 bis 70 Gew.-%, bezogen auf die Gesamtmenge der Emulsion.

Weitere Bestandteile sind im allgeimeinen bekannte, nichtionische oder ionische Emulgatoren, beispielsweise mit einem HLB-Wert von 1,5 bis 20, darunter insbesondere Stearate, Oleate und gegebenenfallspuffernde Substanzen. Bei der Verwendung dieser Emulsionen ist bevorzugt darauf zu achten, daß die Tröpfchengröße der Organosiliciumverbindungen im Wasser einen Durchmesser von 0,5 bis 10 µm haben. Die mittlere Teilchengröße liegt in einem besonders geeigneten Fall bei 0,30 bis 1,1 µm.
In einer besonderen Ausführungsform enthält die Emulsion 1 bis 80 Gew.-%, bevorzugt 1 bis 60 Gew.-%, mindestens eines Alkylalkoxysilans der allgemeinen Formel 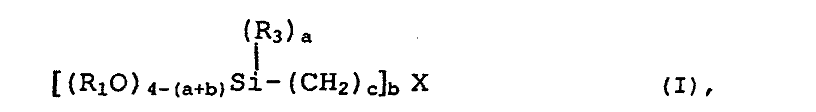 in der bedeuten:
- R, R₁:: C₁-C₃-Alkyl, gegebenenfalls verzweigt,
- R₃:: C₁ - C₂₀-Alkyl, geradkettig oder verzweigt insbesondere C₁ - C₁₀-Alkyl, Phenyl,
- a:: 0 oder 1,
- b:: 1 oder 2,
- c:: 1 bis 18,
- X:: H, Cl, Br, J, NH₂, SCN, CN, N₃, NHR, N(R)₂, N(R)₃, Aryl, insbesondere H, Cl, NH₂, SCN, NHR, N(R₂), N(R₃) mit der Bedeutung R wie oben, Phenyl, wenn b = 1, oder
- X:: Alkenyl, insbesondere -CH₂-, Ethylen, Trimethylen oder Tetramethylen, wenn b = 2, oder
- X:: Sₓ mit x = 1 bis 6,
wenn b = 2 und c = 1 bis 6, oder
- X:: ohne Bedeutung,
mit b = 2 und c = 1 bis 12, bevorzugt 1 bis 6 und anstelle von oder in Ergänzung eines der bekannten Tenside bevorzugt 1 bis 20 Gew.-%,bevorzugt 1 bis 5 Gew.-% einer Organosiliciumverbindung der allgemeinen Formel 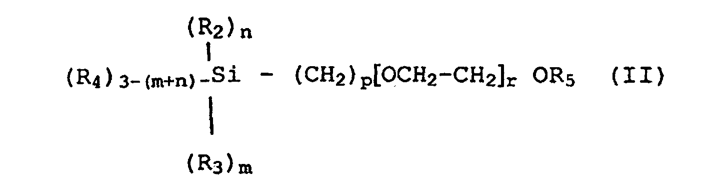 in der bedeuten:
- R₂, R₃:: gleich oder verschieden, C₁-C₂₀-Alkyl, geradkettig oder verzweigt, insbesondere C₁-C₁₀ - Alkyl, Phenyl,
- R₄:: C₁₋C₃-Alkoxy, [OCH₂-CH₂]ᵣ OR₅, 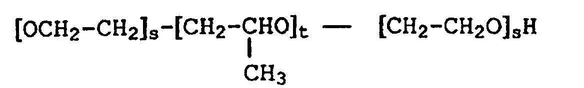 mit s = 3-50, t = 3-25
- R₅:: H, C₁-C₂₀ - Alkyl, C₂-C₃₆-Alkenyl, C₅-C₈-Cycloalkyl, C₇-C₃₆-Aralkyl, wenn p = o und r = 0 entspricht OR₅: -[OCH₂-CH₂]ₛ-[CH₂-CHO]ₜ - [CH₂-CH₂O]₅H
- m:: 0, 1, 2;
- n:: 0, 1, 2 mit der Maßgabe, daß (m+n) = 1 oder 2 ist, wenn p = 0 ist, bei p ‡ 0 gilt (m+n) = 0,1 oder 2,
- p:: 0, 1, 2, 3,
- r:: eine ganze Zahl zwischen 0 und 50, und Wasser in einer Menge von 1 bis 95 Gew.-%, bevorzugt 1 bis 75 Gew.-%, enthält, wobei sich die Gewichtsmengen auf 100 % ergänzen, und die Mischung anschließend zum Beton aushärten läßt.

Bevorzugt setzt man das n-Octyltriethoxysilan und das Hexadecyltriethoxysilan als Verbindung (I) ein.

Die Emulsionen können neben den Verbindungen gemäß Formel (I) auch deren Ankondensationsprodukte enthalten, z. B. Dimere, Trimere oder andere Oligomere, wie sie dem Fachmann allgemein bekannt sind.
Der pH-Wert der Emulsion wird vorzugsweise auf etwa 7,5 eingestellt.
In einer besonderen Ausführungsform setzt man der Emulsion eine Puffersubstanz in einer Menge von 0,1 bis 5 Gew.-% zu, bezogen auf die Gesamtmenge der Emulsion.
Dabei handelt es sich beispielsweise um Natriumhydrogencarbonat, Natriumcarbonat oder Trinatriumphosphat.

In einer bevorzugten Ausführungsform setzt man der Emulsion auch 0,2 bis 8,0 Gew.-%, bezogen auf das Gesamtgewicht der Emulsion, eines oder mehrere der bekannten anionischen Tenside zu.
Die disperse Phase weist vorteilhaft einen mittleren Teilchen- bzw. Tröpfchendurchmesser von 0,30 bis 1,1 µm auf.

Gegebenenfalls enthält die erfindungsgemäße Emulsion auch 0,1 bis 1,0 Gew.-% eines bekannten Verdickers, z. B. aus der Klasse der Cellulose- oder Stärkederivate, ebenfalls bezogen auf die Gesamtmenge der Emulsion.

In einer speziellen Ausführungsform werden siliciumfunktonelle Tenside mit den allgemeinen Formeln 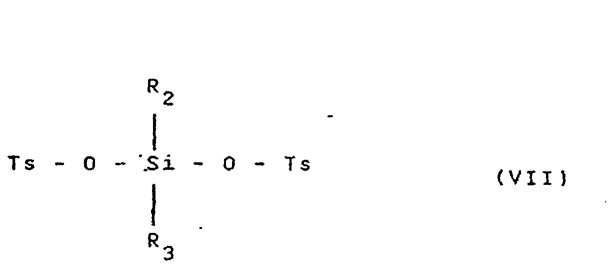 oder 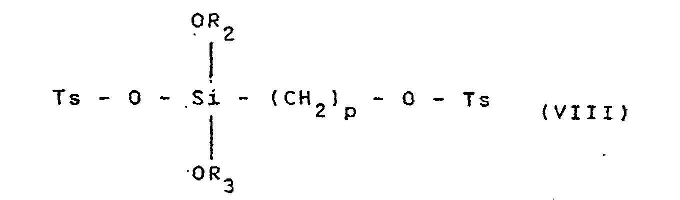 in der R₂, R₃ und p die Bedeutung wie oben besitzen und Ts entspricht:

(CH₂CH₂O)ₙ-R₅ n = 3 - 15.

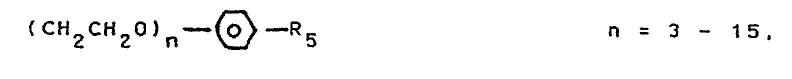

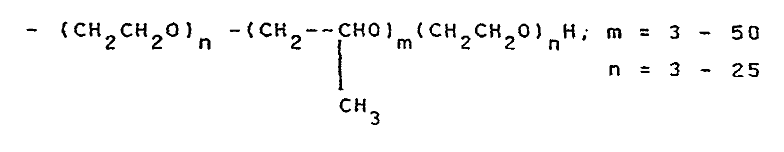

eingesetzt.

In einer bevorzugten Ausführungsform setzt man, insbesondere auch bei kurzkettigen, z.B. C₃- und C₄-Alkylengruppen-haltigen Silanen enthaltenden Emulsionen kurz vor der Anwendung einen sauren Katalysator zu, der fähig ist, die Si-O-Bindungen, nicht aber die Si-C-Bindungen in den beanspruchten Alkoxysilanen zu brechen, um durch die Wirksamkeit der Silane auf neutralen, schwach sauren oder alkalischen, insbesondere problematischen Substraten zu erhöhen.

Als optimal erweist sich natürlich eine homogene Verteilung der erfindungsgemäß eingesetzten Emulsion in der Betonmischung. Unter den realen Einsatzbedingungen auf der Baustelle kann man jedoch nicht immer von idealen Voraussetzungen ausgehen.
Es hat sich aber gezeigt, daß man auch bei weitgehend homogenen Mischungen der Betonbestandteile mit den erfindungsgemäßen Organosiliciumverbindungen die Vorteile des erfindungsgemäß hergestellten hydrophobierten Betons findet.

Die erfindungsgemäß eingesetzten Emulsionen setzt man den feinteiligen anorganischen und gegebenenfalls organischen Bestandteilen der Betonmischung vorteilhaft zusammen mit dem für die Herstellung dieser Mischung notwendigen Wasser zu.

Die Konzentration der Emulsionen beläuft sich auf 0,1 bis 10, insbesondere 0,5 bis 7 Gew.-%, bezogen auf den in der Betonmischung vorhandenen Zement.

Es wurde gefunden, daß die erfindungsgemäße Verwendung der die Organosilicumverbindungen enthaltenden Emulsionen nicht nur zu einer durchgehenden, im Idealfall homogenen Hydrophobierung des Betons führt. Bereits bei der Verarbeitung der frischen Betonmischung zeigen sich im Vergleich zur Standardmischung ohne Organosiliciumverbindungen Vorteile im Hinblick auf das bessere Fließverhalten.

Die verflüssigende Wirkung der Emulsionen kann in bestimmten Fällen zur Reduktion des Wassergehalts in der herzustellenden Betonmischung genutzt werden, was sich zusätzlich vorteilhaft auf die Festigkeitsentwicklung und Dichtigkeit auswirkt.

Die erfindungsgemäß hergestellten Betonmischungen werden in einer wichtigen Anwendungsform in Form von Spritzbeton auf tragende Elemente, insbesondere aus Beton aufgebracht.

Schadsalze dringen durch diese Schutzschicht nicht in den Konstruktionsbeton vor.

Dieser kann entsprechend auf seine Aufgabe als Tragwerk hin optimiert werden, da die schützende Funktion durch die Deckschicht übernommen wird.

Es kann aber auch von Bedeutung sein, diese Deckschicht nachträglich aufzubringen, wenn ein Bauwerk z. B. durch ein Umnutzung einer nicht vorhergesehenen Belastung durch Schadstoff ausgesetzt wird.

Es existieren ebenso wichtige Anwendungen, die eine durchgehende Hydrophobierung der Betonteile erfordern.

Dazu gehören z. B. Brückenkappen, Tunnelein- und ausgänge oder Abwasserrohre.

Die erfindungsgemäß hergestellten Betonmischungen weisen nach der Aushärtung einen deutlich geringeren Wasseraufnahmekoeffizienten und einen erheblich höheren Widerstand gegen das Eindringen von Chlorid als nichtbehandelter Beton auf.

Diese Eigenschaften sind im Gegensatz zu den bei der äußerlichen Behandlung erzielten Verbesserungen von Dauer, da sie keinen Abnutzungserscheinungen der Oberfläche unterliegen.

Eine Massenhydrohobierung, wie hier beschrieben, hat der Fachmann bisher nicht erwogen, weil man nach dem Stand der Technik eine Hydrolyse bzw. Kondensation der eingesetzten Organosiliciumverbindungen während der Verarbeitung aufgrund der stark alkalischen Bedingungen in der Betonmischung erwartete, die die Wirksamkeit der hydrophobierenden Verbindungen stark vermindert hätte.

Es sind auch Anwendungen denkbar, in denen die hydrophoben Eigenschaften des erfindungsgemäß hergestellten Betons durch eine nach dem Stand der Technik (DE-PS 2751714, US-PS 4,661,551) erfolgende äußere Behandlung mit Organosiliciumverbindungen oder den beschriebenen Emulsionen verstärkt werden.

### Beispiele

1. Verwendete Verbindungen:
- Silan Typ A:: Octyltriethoxysilan (50 Gew.-% der Emulsion)
Silantensid gemäß Formel (II)
(EP-B-0538555)
(1 Gew.-% der Emulsion)
- Silan Typ B:: Hexadecyltriethoxysilan (50 Gew.-% der Emulsion)
Silantensid gemäß Formel (II)
(EP-B-0538555)
(1 Gew.-% der Emulsion)

2. Prüfungen an den Betonkörpern wurden nach den Vorschriften des Schweizerischen Ingenieur- und Architekten-Vereins vorgenommen: SIA 162 (1993) SIA 162/1 (1989, Betonbauten-Materialprüfung).
3. Zusammensetzung der Betonmischung

**Tabelle 1**

| | |
|---|---|
| Sand, 0 - 4 mm [kg/m³] | 829 |
| Aggregate, 4 - 8 mm [kg/m³] | 368 |
| Aggregate, 8 - 16 mm [kg/m³] | 645 |
| Portland Cement CEM I 42.5 [kg/m³] | 350 |
| Wasser [kg/m³] | 175 |
| Silanemulsion (aktiver Gehalt 51 %) | 10,5 |

4. Eigenschaften von frischem Beton

**Tabelle 2**

| **Versuch Nr.** | | **Ausbreitma**ß **[cm]** | **Luftgehalt [%]** | **Dichte [kg/dm**^{**3**}**]** |
|---|---|---|---|---|
| **1** | Silanemulsion Typ A | 39.5 | 2.80 | 2373 |
| **2** | Silanemulsion Typ B | 41.5 | 3.0 | 2375 |
| **3** | Standard Beton | 36 | 3.2 | 2383 |

Das für die Fließfähigkeit charakteristische Ausbreitmaß zeigt, daß die erfindungsgemäß hergestellten Betonmischungen 1 und 2 besser fließen und damit leichter verarbeitbar sind als die Standardmischung ohne Silanemulsion. Ebenso weisen die erfindungsgemäß hergestellen Mischungen einen geringeren Luftgehalt auf, so daß der daraus gefertigte Beton weniger porös wird.
5. Widerstand gegen das Eindringen von Chlorid
Der Widerstand gegen das Eindringen von Chlorid wird mit einer 3%-igen NaCl-Lösung getestet. Zu diesem Zweck werden vier Seiten eines Betonwürfels mit Epoxidharz beschichtet.
Dieser Würfel wird dann mit einer nichtbeschichteten Seite 24 Stunden in die Salzlösung getaucht und die kapillare Flüssigkeitsaufnahme gemessen.
Die Probewürfel werden anschließend 24 Stunden bei 50°C getrocknet.
Dieser Vorgang wird mehrfach wiederholt, bis sich ein quasi konstanter Wert einstellt. Nach 15 Tagen zeigte der unbehandelte Betonkörper eine Aufnahme von ca. 9 kg/m² während der imprägnierte Beton nur ca. 1 kg/ m² aufgenommen hatte.
6. Wasseraufnahmekoeffizient des Betons

**Tabelle 3**

| **Versuch Nr.** | | **Wasseraufnahmekoeffizient [kg/m**^{**2**}**h**^{**0**}^{**.**}^{**5**}**]** |
|---|---|---|
| **1** | Silanemulsion Typ A | 0.084 |
| **2** | Silanemulsion Typ B | 0.112 |
| **3** | Standard Beton | 1.31 |

Der Wasseraufnahmekoeffizient des erfindungsgemäß hergestellten Betonkörpers liegt deutlich niedriger als der der Standardmischung.

## Patentansprüche

1. Verfahren zur Herstellung von in der Masse hydrophobiertem Beton,
**dadurch gekennzeichnet,**
**daß** man einer wasserhaltigen Mischung aus an sich bekannten anorganischen und gegebenenfalls in geringem Umfang organischen Bestandteilen während der Herstellung oder gegebenenfalls im Anschluß daran eine wäßrige Organosiliciumverbindung der allgemeinen Formel 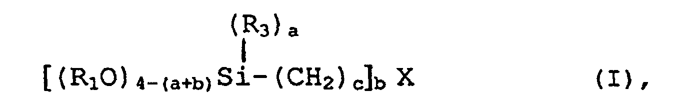 und gegebenenfalls deren Ankondensationsprodukte enthaltende Emulsion zusetzt, wobei bedeuten:
R, R₁: C₁-C₃-Alkyl,
R₃: C₁ - C₂₀-Alkyl, Phenyl,
a: 0 oder 1,
b: 1 oder 2,
c: 1 bis 18,
X: H, Cl, Br, J, NH₂, SCN, CN, N₃, NHR, N(R)₂, N(R)₃, Aryl, wenn b = 1, oder
X: Alkenyl,
wenn b = 2, oder
X: Sₓ mit x = 1 bis 6,
wenn b = 2 und c = 1 bis 6, oder
X: ohne Bedeutung,
mit b = 2 und c = 1 bis 12,
und die Mischung anschließend zum Beton aushärten läßt.

2. Verfahren gemäß Anspruch 1,
**dadurch gekennzeichnet,**
**daß** die Emulsion hydrolysierbare Organosiliciumverbindungen und ionische oder nichtionische Tenside (Emulgatoren) enthält.

3. Verfahren gemäß den Ansprüchen 1 oder 2,
**dadurch gekennzeichnet,**
**daß** man eine Emulsion einsetzt, deren disperse Phase eine mittlere Teilchengröße von 0,3 bis 1,1 µm und eine Breite der Teilchengrößenverteilung von ≤ 1,3 aufweist.

4. Verfahren gemäß den Ansprüche 1 bis 3,
**dadurch gekennzeichnet,**
**daß** man eine Emulsion zusetzt, die 1 bis 80 Gew.-% mindestens eines Alkoxysilans der allgemeinen Formel 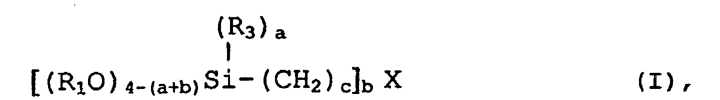 und gegebenfalls dessen Ankodensationsprodukte und anstelle von oder in Ergänzung eines der bekannten Tenside insbesondere 1 bis 20 Gew.-% einer Organosiliciumverbindung der allgemeinen Formel 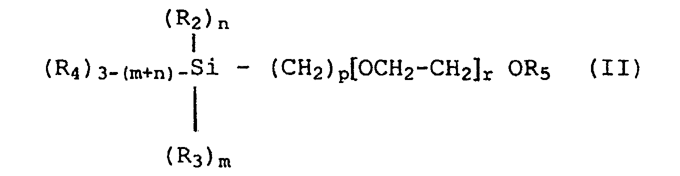 in der bedeuten:
R₂, R_{3:} gleich oder verschieden, C₁-C₂₀-Alkyl, Phenyl,
R₄: C₁-C₃-Alkoxy,
[OCH₂-CH₂]ᵣ OR₅, 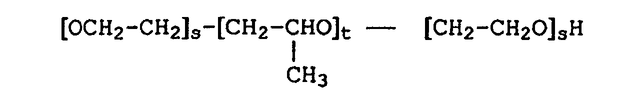 mit s = 3-50, t = 3-25
R₅: H, C₁-C₂₀ - Alkyl, C₂-C₃₆-Alkenyl, C₅-C₈-Cycloalkyl, C₇-C₃₆-Aralkyl, wenn p = o und r = 0 entspricht OR₅: -[OCH₂-CH₂]ₛ-[CH₂-CHO]ₜ ― [CH₂-CH₂O]₅H
m: 0, 1, 2;
n: 0, 1, 2 mit der Maßgabe, daß (m+n) = 1 oder 2 ist, wenn p = 0 ist, bei p ‡ 0 gilt (m+n) = 0,1 oder 2,
p: 0, 1, 2, 3,
r: eine ganze Zahl zwischen 0 und 50,
und Wasser in einer Menge von 1 bis 95 Gew.-% enthält, wobei sich die Gewichtsmengen auf 100 % ergänzen.

5. Verfahren gemäß Anspruch 4,
**dadurch gekennzeichnet,**
**daß** man eine Emulsion einsetzt, die siliciumfunktionelle Tenside mit den allgemeinen Formeln 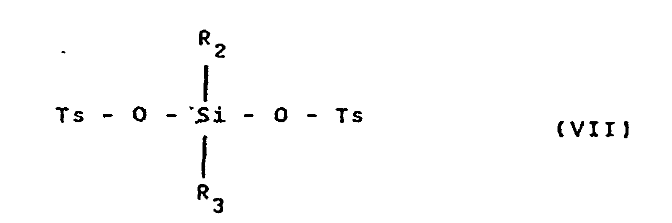 oder 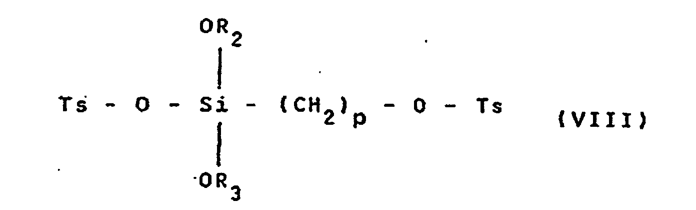 in der R₂, R₃ und p die Bedeutung wie oben besitzen und Ts entspricht:
(CH₂CH₂O)ₙ-R₅ n = 3 - 15, 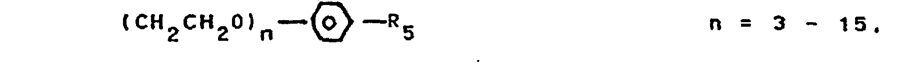 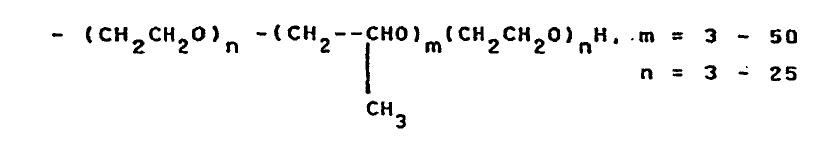
enthält.

6. Verfahren gemäß den Ansprüchen 1 bis 5,
**dadurch gekennzeichnet,**
**daß** man eine Emulsion einsetzt, die 0,2 bis 8,0 Gew.-%, bezogen auf das Gesamtgewicht der Emulsion, eines oder mehrere der bekannten anionischen Tenside enthält.

7. Verfahren gemäß den Ansprüchen 4 bis 6,
**dadurch gekennzeichnet,**
**daß** man der Emulsion vor der Anwendung einen sauren Katalysator zusetzt.

8. Verfahren gemäß einem oder mehreren der vorhergehenden Ansprüche,
**dadurch gekennzeichnet,**
**daß** man die Emulsion in einer Menge von 0,1 bis 10 Gew.-% , bezogen auf den Zement, der Betonmischung zusetzt.

9. Verfahren gemäß einem oder mehreren der vorhergehenden Ansprüche,
**dadurch gekennzeichnet,**
**daß** man die Emulsion zusammen mit dem Wasser der Betonmischung zusetzt.

10. Verfahren gemäß Anspruch 1,
**dadurch gekennzeichnet,**
**daß** man eine die wäßrige, Organosiliciumverbindungen enthaltende Emulsion aufweisende Betonmischung herstellt, diese verarbeitet, aushärten läßt und anschließend nach dem Stand der Technik an der Oberfläche hydrophobierend behandelt.

11. Betonmischungen, die die an sich bekannten anorganischen und gegebenfalls organischen Bestandteile und die wäßrigen Emulsionen entsprechend Anspruch 1 enthalten.

12. Verwendung von Betonmischungen
gemäß Anspruch 11 als Spritzbeton zur Herstellung von Deckschichten.

13. Verwendung von Betonmischungen
gemäß Anspruch 11 zur Herstellung konstruktiver Teile.

## Claims

1. A process for producing bulk-hydrophobicized concrete,
**characterized in that**
an emulsion comprising an aqueous organosilicon compound of the general formula 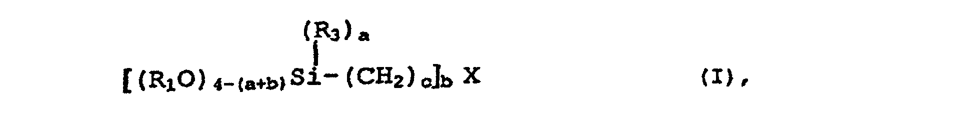 and, if desired, condensation products of this compound, are added, during the preparation process or, where appropriate, following the preparation process, to a hydrous mixture made from inorganic and, if desired, small amounts of organic constituents known per se, where:
R and R₁ are C₁-C₃-alkyl,
R₃ is C₁-C₂₀-alkyl or phenyl
a is 0 or 1,
b is 1 or 2,
c is from 1 to 18,
X is H, Cl, Br, I, NH₂, SCN, CN, N₃, NHR, N(R)₂, N(R)₃ or aryl
if b = 1, or
X is alkenyl
if b = 2, or
X is Sₓ where x = from 1 to 6,
if b = 2 and c = from 1 to 6, or
X is absent,
where b = 2 and c = from 1 to 12,
and the mixture is then allowed to set to give the concrete.

2. A process according to claim 1,
**characterized in that**
the emulsion comprises hydrolysable organosilicon compounds and ionic or non-ionic surfactants (emulsifiers).

3. A process according to claim 1 or 2,
**characterized in that**
use is made of an emulsion whose disperse phase has an average particle size of from 0.3 to 1.1 µm and a particle size distribution breadth of ≤ 1.3.

4. A process according to any of claims 1 to 3
**characterized in that**
use is made of an emulsion which comprises from 1 to 80% by weight of at least one alkoxysilane of the general formula 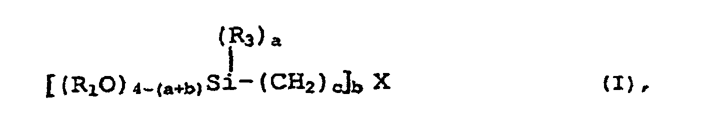 and, if desired, its condensation products, and, instead of or as a supplement to one of the known surfactants, in particular from 1 to 20% by weight of an organosilicon compound of the general formula 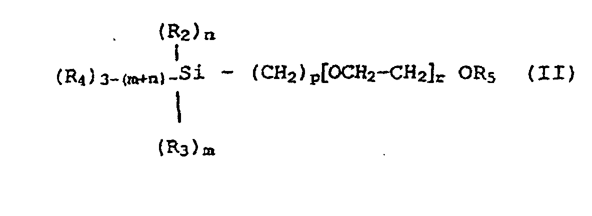 where:
R₂ and R₃ are identical or different and are C₁-C₂₀-alkyl or phenyl,
R₄ is C₁-C₃-alkoxy,
[OCH₂-CH₂]ᵣ OR₅, 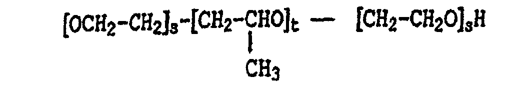 where s = from 3 to 50, t = from 3 to 25
R₅ is H, C₁-C₂₀-alkyl, C₂-C₃₆-alkenyl, C₅-C₈-cycloalkyl, C₇-C₃₆-aralkyl, and if
p = 0 and r = 0 OR₅ is:
- [OCH₂-CH₂]ₛ-[CH₂-CHO]ₜ-[CH₂-CH₂O]₅H
m is 0, 1 or 2;
n is 0, 1 or 2 with the proviso that (m+n) = 1 or 2, if p = 0, and if p ≠ 0 (m+n) = 0, 1 or 2,
p is 0, 1, 2 or 3,
r is an integer from 0 to 50,
and from 1 to 95% by weight of water, the quantities by weight giving 100% in total.

5. A process according to claim 4,
**characterized in that**
use is made of an emulsion which comprises silicon-functional surfactants with the general formulae 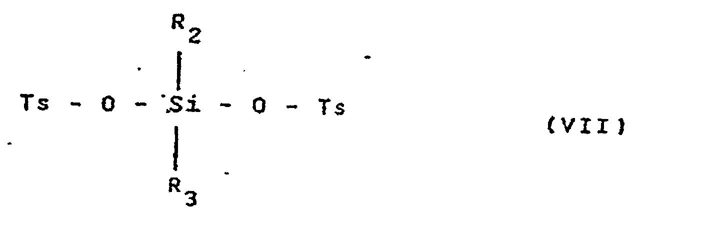 or 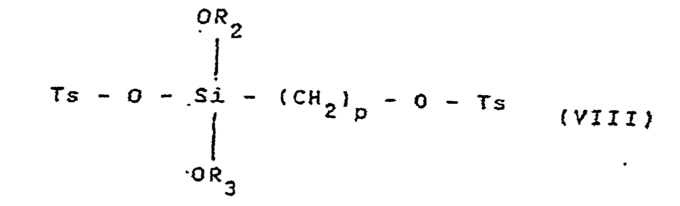 where R₂, R₃ and p are as defined above and Ts is:
(CH₂CH₂O)ₙ-R₅ n = 3 - 15,

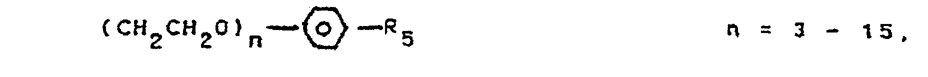

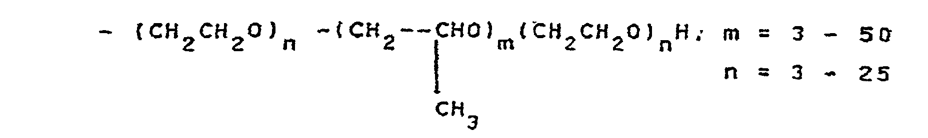

6. A process according to any of claims 1 to 5
**characterized in that**
use is made of an emulsion which comprises from 0.2 to 8.0% by weight, based on the total weight of the emulsion, of one or more of the known anionic surfactants.

7. A process according to any of claims 4 to 6
**characterized in that**
an acidic catalyst is added to the emulsion prior to use.

8. A process according to one or more of the preceding claims,
**characterized in that**
the amount of the emulsion added to the concrete mixture is from 0.1 to 10% by weight, based on the cement.

9. A process according to one or more of the preceding claims,
**characterized in that**
the emulsion is added together with the water to the concrete mixture.

10. A process according to claim 1,
**characterized in that**
a concrete mixture comprising the emulsion comprising the aqueous organosilicon compounds is prepared, processed and allowed to set, and then is surface-hydrophobicized according to the prior art.

11. A concrete mixture which comprises inorganic and, if desired, organic constituents known per se and the aqueous emulsion corresponding to claim 1.

12. The use of concrete mixtures
according to claim 11 as spray concrete for topcoat production.

13. The use of concrete mixtures
according to claim 11 for producing construction components.

## Revendications

1. Procédé de fabrication d'un béton hydrophobe dans sa masse,
**caractérisé en ce qu'**
à un mélange aqueux de composants anorganiques connus en soi et éventuellement de composants organiques en faible quantité, on ajoute pendant la fabrication ou éventuellement à la suite de celle-ci un composé organosilicique aqueux de formule générale 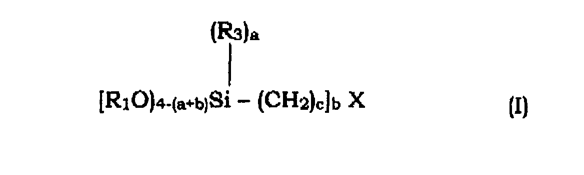 et éventuellement une émulsion contenant des produits de condensation de ce composé, avec les significations suivantes des symboles :
R, R₁ : C₁-C₃-alkyle
R₃ : C₁-C₂₀ alkyle ; phényl
a : 0 ou 1
b : 1 ou 2
c : 1 à 18
X : H, Cl, Br, J, NH₂, SCN, CN, N₃, NHR, N(R)₂, N(R)₃, Aryle quand b = 1, ou
X : alkényle, quand b = 2, ou
x : Sₓ avec x = 1 à 6 quand b = 2 et c = 1 à 6, ou
X : sans signification quand b = 2 et c = 1 à 12
et le mélange est ensuite durci pour donner du béton.

2. Procédé selon la revendication 1,
**caractérisé en ce que**
l'émulsion contient des composés organosiliciques hydrolysables et des tensioactifs (émulsionneurs) ioniques et non ioniques.

3. Procédé selon la revendication 1 ou 2,
**caractérisé en ce qu'**
on utilise une émulsion dont la phase dispersée est composée de particules de grandeur moyenne comprise entre 0,3 et 1,1 µm avec une distribution dimensionnelle de largeur ≤ 1,3.

4. Procédé selon les revendications 1 à 3,
**caractérisé en ce qu'**
on ajoute une émulsion qui contient de 1 à 80% en poids d'au moins un alkoxysilane de formule générale 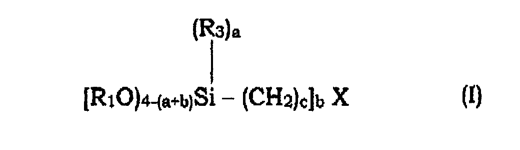 et éventuellement des produits de condensation de ce composé et, au lieu de ou en complément d'un des tensioactifs connus en particulier 1 à 20% en poids d'un composé organosilicique de formule générale 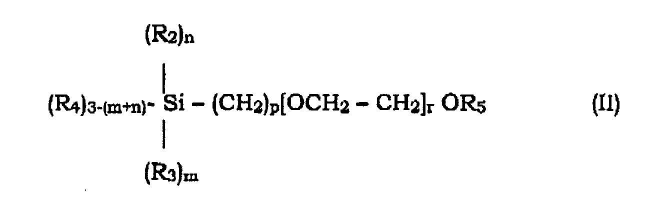 avec les significations suivantes des symboles
R₂,R3: identiques ou différents, C₁-C₂₀-alkyle, phényle
R₄ : C₁-C₃-alkoxy
[OCH₂ - CH₂]ᵣ OR₅, 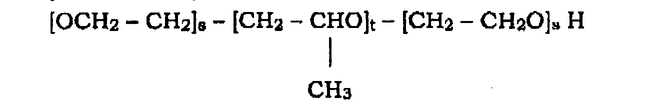 avec s = 3 - 50, t = 3 - 25
R₅ : H, C₁-C₂₀ - alkyl, C₂-C₃₆-alkényl, C₅-C₈- cycloalkyl, C₇-C₃₆- aralkyl, et si p = o et r = 0,
R₅ : -[OCH₂ - CH₂]ₛ - [CH₂ - CHO]ₜ - [CH₂ - CH₂O]₅H
m : 0, 1, 2;
n : 0, 1, 2 avec la précision que (m+n)=1
ou 2, si p=0,
et (m+n)=0, 1 ou 2, si p ≠ 0,
p : 0, 1, 2 ou 3,
r : un nombre entier entre 0 et 50,
cette émulsion contenant de l'eau dans une proportion de 1 à 95% en poids, de manière à compléter à 100 % les taux pondéraux.

5. Procédé selon la revendication 4,
**caractérisé en ce qu'**
on utilise une émulsion contenant des tensioactifs fonctionnels de formule générale 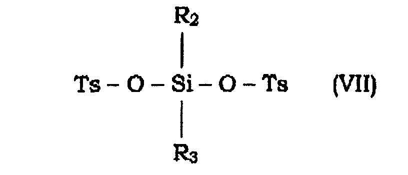 ou 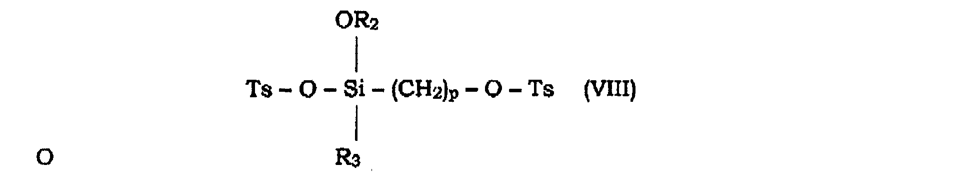 dans lesquelles R₂, R₃ et p ont la même signification que précédemment, et Tₛ correspond à
(CH₂CH₂O)ₙ - R5 n= 3 - 15

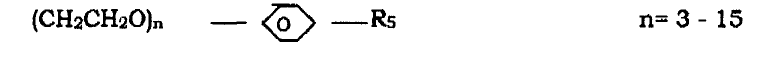

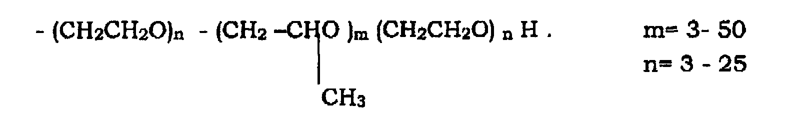

6. Procédé selon les revendications 1 à 5,
**caractérisé en ce qu'**
on utilise une émulsion contenant 0,2 % à 8,0 % par rapport au poids total de l'émulsion, d'un ou plusieurs des tensioactifs anioniques connus.

7. Procédé selon les revendications 4 à 6,
**caractérisé en ce qu'**
on ajoute à l'émulsion, avant utilisation, un catalyseur acide.

8. Procédé selon l'une ou plusieurs des revendications précédentes,
**caractérisé en ce qu'**
on ajoute au mélange de béton l'émulsion dans une proportion de 0,1 à 10 % en poids, par rapport au ciment.

9. Procédé selon l'une ou plusieurs des revendications précédentes,
**caractérisé en ce qu'**
on ajoute l'émulsion au mélange de béton, en même temps que l'eau.

10. Procédé selon la revendication 1,
**caractérisé en ce qu'**
on fabrique un mélange de béton avec l'émulsion contenant les composés organosiliciques aqueux, on façonne ce mélange, on le laisse durcir et ensuite on le traite selon l'état de la technique en le rendant hydrophobe en surface.

11. Mélange de béton, contenant les composants anorganiques connus en eux-mêmes et éventuellement des composants organiques, ainsi que les émulsions aqueuses selon la revendication 1.

12. Utilisation de mélanges de béton selon la revendication 11, comme béton projeté pour réaliser des couches de revêtement.

13. Utilisation de mélanges de béton selon la revendication 11, pour fabriquer des parties constructives.
